# EUROPÄISCHE PATENTSCHRIFT

(11) **EP 0 509 188 B1**
(45) Veröffentlichungstag und Bekanntmachung des Hinweises auf die Patenterteilung: **12.01.1994**
(21) Anmeldenummer: 91890081.2
(22) Anmeldetag: 18.04.1991
(51) Int. Cl.: B23Q 3/06, B23Q 1/20

(54) **Werkzeugmaschine zur Bearbeitung plattenförmiger Werkstücke**
Machine-tool for working plate-like workpieces
Machine-outil à usiner des plaques

(43) Veröffentlichungstag der Anmeldung: 21.10.1992
(73) Patentinhaber: GFM Gesellschaft für Fertigungstechnik und Maschinenbau Aktiengesellschaft, A-4403 Steyr (AT)
(72) Erfinder: Pilkington, Donald J., Kettering, Northants NN157L2 (AT)
(74) Vertreter: Hübscher, Heiner, Dipl.-Ing.

(56) Entgegenhaltungen:
- WO-A-88/09236
- DE-A- 3 918 120
- US-A- 2 194 393

## Beschreibung

Die Erfindung bezieht sich auf eine Werkzeugmaschine zur Bearbeitung plattenförmiger Werkstücke, insbesondere zur Umrißbearbeitung übereinandergelegter Blechteile, mit einem eine Auflagefläche und Aufspanneinrichtungen aufweisenden Aufspanntisch und einem auf einem Werkzeugschlitten sitzenden, über die Auflagefläche verfahrbaren Werkzeugaggregat, wobei ein parallel zum Werkzeugaggregat über die Arbeitsfläche bewegbarer Niederhalter mit einem auf die Werkstückoberfläche aufdrückbaren Niederhalterschuh zur Werkstückhalterung im Nahbereich der Bearbeitungsstelle vorgesehen ist.

Voraussetzung für eine saubere Werkstückbearbeitung ist eine einwandfreie Werkstückhalterung, wobei häufig auch eine Fixierung des Werkstückes im Nahbereich der jeweiligen Bearbeitungsstelle wichtig ist. Vor allem beim gemeinsamen Bearbeiten übereinandergelegter Werkstücke, wie ein Ausschneiden bzw. Umrißfräsen von Blechteilen od. dgl., muß für einen entsprechenden Halt der Werkstückstapel sowohl gegenüber der Auflagefläche als auch gegenüber den einzelnen Lagen selbst gesorgt werden, wozu die Werkstücke bisher stapelweise mit einer unteren Aufspannpalette zu einer Werkstückeinheit zusammengenietet werden, die dann über die vorhandenen Aufspanneinrichtungen, die Niederhalterpratzen, Saugkästen für die Auflagefläche u. dgl. aufweisen können, am Aufspanntisch festzuspannen sind. Um dabei auch im Nahbereich der Bearbeitungsstelle eine Werkstückhalterung zu erreichen, gibt es auch schon zusätzliche Niederhalter, die mit einem die Werkzeugspindel od. dgl. konzentrisch umschließenden ringförmigen Niederhalterschuh ausgestattet sind. Dieser Niederhalterschuh wird während der Bearbeitung auf den Werkstückstapel bzw. die Werkstückoberfläche aufgedrückt und mit dem Werkzeug mitbewegt, so daß die gewünschte Werkstückhalterung im Bearbeitungsbereich sichergestellt wird. Wie die US-A 3 587 391 oder die EP -A 0 010 043 zeigen, sind die bekannten Niederhalter unmittelbar am Werkzeugaggregat montiert und damit zwangsweise an die Vorschubbewegung des Werkzeuges gebunden, wodurch bei einem in sich geschlossenen Bearbeitungsverlauf, etwa beim Ausschneiden von Blechteilen, das Durchtrennen des Reststeges am Bearbeitungsende zu Schwierigkeiten führt. Das Durchtrennen löst nämlich die ausgeschnittenen Teile vom übrigen Werkstück und wegen der Vorschubbewegung von Werkzeug und Niederhalterschuh entsteht die Gefahr eines Verschiebens der Losteile, wodurch die Exaktheit des Schnittverlaufes leidet. Trotz der Niederhalter ist daher ein spezielles Vernieten dieser auszuschneidenden Teile und der übrigen Teile notwendig. Die bekannten Halterungsmaßnahmen sind daher recht aufwendig und zeitraubend und erfordern außerdem eine nicht zu vermeidende Lochung od. dgl. der Werkstücke.

Der Erfindung liegt daher die Aufgabe zugrunde, diese Mängel zu beseitigen und eine Werkzeugmaschine der eingangs geschilderten Art zu schaffen, die eine einwandfreie Werkstückbearbeitung vor allem durch Ausschneiden oder Umrißfräsen gewährleistet und eine Bearbeitung von Werkstückstapeln ohne deren Nietung od. dgl. erlaubt.

Die Erfindung löst dieses Aufgabe dadurch, daß der Niederhalter auf einem eigenen, in seinen Vorschubbewegungen mit dem Werkzeugschlitten synchronisierbaren Niederhalterschlitten sitzt, der während der Bearbeitung bedarfsweise im Sinne einer werkstückfesten Positionierung des Niederhalters durch Unterbrechen der Synchronbewegung gegenüber dem Werkzeugschlitten relativverschiebbar ist. Da ein eigener Niederhalterschlitten den Niederhalter trägt, ist die Niederhalterbewegung nicht zwangsweise und ständig an die Werkzeugaggregatbewegung gebunden und der Niederhalter läßt sich bedarfsweise auch ortsfest positionieren. So ist es möglich, beim Ausschneiden von Werkstückteilen den Niederhalterschuh gemeinsam mit dem Werkzeugaggregat, dem gewünschten Schnittverlauf folgend, umlaufen zu lassen und dann im Endbereich der Bearbeitung zur Durchtrennung des Reststeges den Niederhalter anzuhalten. Dadurch kann nun der Niederhalterschuh werkstückfest auf die Werkstückoberfläche aufgedrückt und das Werkzeug alleine zur Beendigung des Arbeitsablaufes vorwärtsbewegt werden, so daß der Niederhalterschuh für eine exakte Halterung sowohl der ausgeschnittenen Teile als auch der übrigen Werkstückteile sorgt. Ohne die Notwendigkeit von Vernietung od. dgl. kommt es zu einem einwandfreien Schnittverlauf und einer einwandfreien Bearbeitung, sei es durch Umrißfräsen oder ein anderes Schnittverfahren.

An und für sich eignen sich als Niederhalterschlitten alle Schlitten, deren Bewegungen auf die Werkzeugschlittenbewegungen abstimmbar sind, und da der Werkzeugschlitten meist als Kreuzschlitten aus einem die Auflagefläche überbrückenden Längsschlitten und einem auf dem Längsschlitten verfahrbaren Querschlitten ausgebildet ist, um das Werkzeugaggregat in beliebiger X-Y- Richtung über die Arbeitsfläche bewegen zu können, ist es vorteilhaft, wenn auch der Niederhalterschlitten aus einem entsprechenden Kreuzschlitten besteht, so daß die Schlittenbewegungen einfach synchronisierbar sind. Der Niederhalterschlitten ist dabei günstigerweise gleichlaufend zum Werkzeugschlitten am Aufspanntisch geführt und über eine Kupplungseinrichtung mit dem Werkzeugschlitten kuppelbar, wodurch der Niederhalterschlitten keine eigenen Antriebe erfordert und über den Werkzeugschlitten betrieben werden kann. Sind Werkzeugschlitten und Niederhalterschlitten miteinander gekuppelt, erfolgt für eine übliche Bearbeitung die synchrone Bewegung von Werkzeugaggregat und Niederhalter, wird hingegen die Kupplung gelöst, bleibt der Niederhalterschlitten in Position und der Werkzeugschlitten bewegt das Werkzeugaggregat relativ zum Niederhalterschuh weiter, wobei selbstverständlich die Größe des Verschiebeweges bei einem ringförmigen Niederhalterschuh an den gegebenen freien Durchmesserbereich angepaßt sein muß.

Sind für den Niederhalterschlitten Klemmeinrichtungen od. dgl. vorgesehen, kann eine exakte Positionierung des Schlittens und damit die gewünschte Positionierung des Niederhalterschuhs nach dem Entkuppeln gewährleistet werden.

Nach einer vorteilhaften Ausgestaltung der Erfindung sind am in Tischlängsrichtung verfahrbaren Teil des Niederhalterschlittens vor und hinter dem Niederhalterschuh sich über die Breite der Auflagefläche erstreckende, auf die Werkstückoberfläche aufsetzbare Druckrollen gelagert, so daß der Niederhalterschlitten neben dem Niederhalterschuh noch weitere Halterungsmöglichkeiten für die Werkstücke bietet. Diese Druckrollen werden in Tischlängsrichtung mit dem Niederhalter mitgeführt und ergeben zusätzliche, die Werkstückbreite erfassende Halterungen für die Werkstücke, so daß auch größere Werkstückstapel einwandfrei bearbeitet werden können.

Erfindungsgemäß ist es auch möglich, den Niederhalterschlitten am Werkzeugschlitten abzustützen und vorzugsweise mit einem zum Werkzeugschlittenantrieb gegensinnig ansteuerbaren Antrieb auszustatten, wodurch sich eine recht kompakte Konstruktion ergibt. Hier ist der Niederhalterschlitten während der normalen Bearbeitung gegenüber dem Werkzeugschlitten fixiert, so daß der Niederhalter die Werkzeugaggregatbewegung auf Grund der Werkzeugschlittenbewegung mitmacht, und für eine Relativverschiebung von Niederhalter und Werkzeugaggregat ist es dann erforderlich, den Niederhalterschlitten gegensinnig zum Werkzeugschlitten anzusteuern, um den Niederhalter dem Arbeitstisch bzw. den Werkstücken gegenüber ortsfest halten zu können. Auch hier wird der Niederhalterschlitten in seinem Aufbau an den Werkzeugschlitten angeglichen sein, so daß die Bewegungen der Teileschlitten einfach zu koordinieren und zu steuern sind. Da die Weggröße der Relativverschiebungen verhältnismäßig klein bleiben, genügen auch recht geringe Abmessungen für den Niederhalterschlitten und Niederhalterschlitten und Niederhalter können platzsparend am Werkzeugschlitten aufgebaut werden.

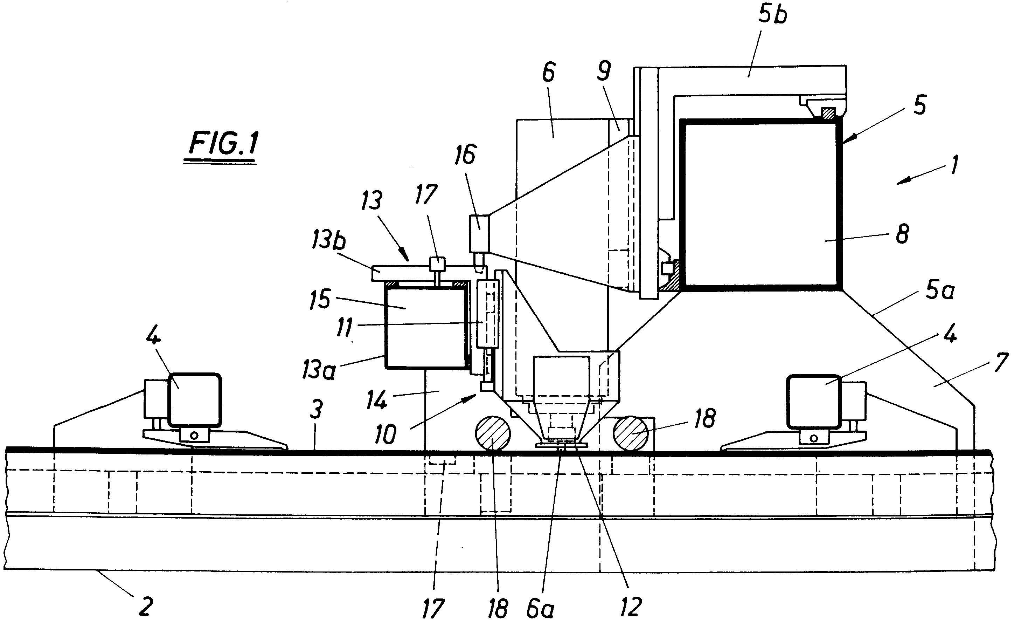

In der Zeichnung ist der Erfindungsgegenstand rein schematisch veranschaulicht, und zwar zeigen
- Fig. 1: einen Teil einer erfindungsgemäßen Werkzeugmaschine im Längsschnitt,
- Fig. 2: einen Teil eines anderen Ausführungsbeispieles einer erfindungsgemäßen Werkzeugmaschine ebenfalls im Längsschnitt und
- Fig. 3: ein Arbeitsschema für eine Einsatzmöglichkeit dieser Werkzeugmaschine.

Eine Werkzeugmaschine 1 zum Umrißfräsen plattenförmiger Werkstücke, insbesondere übereinandergelegter Blechteile, weist einen nur angedeuteten Aufspanntisch 2 auf, der eine Auflagefläche 3 zum Auflegen der Werkstücke bildet und als Aufspanneinrichtung mit in Tischlängsrichtung verstellbaren Niederhalterpratzen 4 ausgerüstet ist. Ein Werkzeugschlitten 5 trägt ein Werkzeugaggregat 6, beispeilsweise ein Spindelaggregat mit einem Umfangsfräser 6a, welcher Werkzeugschlitten, um das Werkzeugaggregat 6 in beliebiger Richtung über die Auflagefläche 3 bewegen zu können, aus einem in Tischlängsrichtung verfahrbar geführten Längsschlitten 5a und einem auf dem Längsschlitten verfahrbaren Querschlitten 5b besteht. Der Längsschlitten 5a ist über seitliche Führungswangen 7 entlang des Aufspanntisches 2 geführt und über einen nicht weiter dargestellten Antrieb längsverfahrbar und der Querschlitten 5b sitzt auf einem die Auflagefläche 3 des Aufspanntisches 2 überbrückenden, die Führung für den Querschlitten 5b bildenden Querträger 8. Auch der Querschlitten 5b ist über einen nicht weiter dargestellten Antrieb entlang des Querträgers 8 verfahrbar, wobei sich als Antriebe für den Längs- und Querschlitten 5a, 5b z.B. Zahnstangen- oder Spindelantriebe bekannter Konstruktionen eignen. Am Querschlitten 5b ist das Werkzeugaggregat 6 montiert, wobei ein Vertikalschlitten 9 die erforderliche Höheneinstellung des Fräswerkzeuges 6a erlaubt.

Um das zu bearbeitende Werkstück im Nahbereich der Bearbeitungsstelle haltern zu können, gibt es einen Niederhalter 10, der mit einem über einen Stellzylinder 11 heb- und senkbaren Niederhalterschuh 12 ausgerüstet ist. Der Niederhalterschuh 12 ist ringförmig ausgebildet und umgibt koaxial das Fräswerkzeug 6a, so daß durch Niederdrücken des Niederhalterschuhs 12 die Werkstücke in einem zur Fräsbearbeitung konzentrischen Bereich fixiert werden. Für den Niederhalter 10 ist ein eigener Niederhalterschlitten 13 vorgesehen, der ähnlich wie der Werkzeugschlitten 5 aus einem Längsschlitten 13a und einem Querschlitten 13b besteht, und auch hier wird der Längsschlitten 13a über seitliche Führungswangen 14 entlang des Aufspanntisches 2 geführt und der Querschlitten 13b sitzt verschiebbar auf einem die Auflagefläche 3 überbrückenden Querträger 15.

Um beim üblichen Arbeitsablauf für eine synchrone Bewegung von Niederhalterschuh 12 und Umfangsfräser 6a sorgen zu können, gibt es eine Kupplungseinrichtung 16, mit der Werkzeugschlitten 5 und Niederhalterschlitten 13 koppelbar sind, so daß der Niederhalterschlitten 13 ohne eigenen Antrieb zwangsweise die exakte Bewegung des Werkzeugschlittens 5 mitmacht und der gewünschte Gleichlauf zwischen Werkzeug und Niederhalter sichergestellt ist. Soll dieser Gleichlauf unterbrochen und für eine Relativbewegung zwischen Werkzeug und Niederhalter gesorgt werden, sind die beiden Schlitten 5, 13 einfach zu entkuppeln, wobei zusätzlich Klemmeinrichtungen 17 die gewünschte Position des Niederhalterschlittens 13 zu fixieren erlauben, und der Werkzeugschlitten 5 kann das Werkzeugaggregat 6 ohne Mitnahme des Niederhalters 10 weiterbewegen.

Um die Werkstückhalterung noch zu verbessern, sind am Längsschlitten 13a des Niederhalterschlittens 13 vor und hinter dem Niederhalterschuh 12 sich quer über die Breite der Auflagefläche 3 erstreckende Druckrollen 18 gelagert, die in Längsrichtung mit dem Niederhalter 10 mitfahren und bei plattenförmigen Werkstücken, wie Blechteilen usw., zusätzlich zum Fixieren einen Ausgleich von Unebenheiten und Wellungen mit sich bringen.

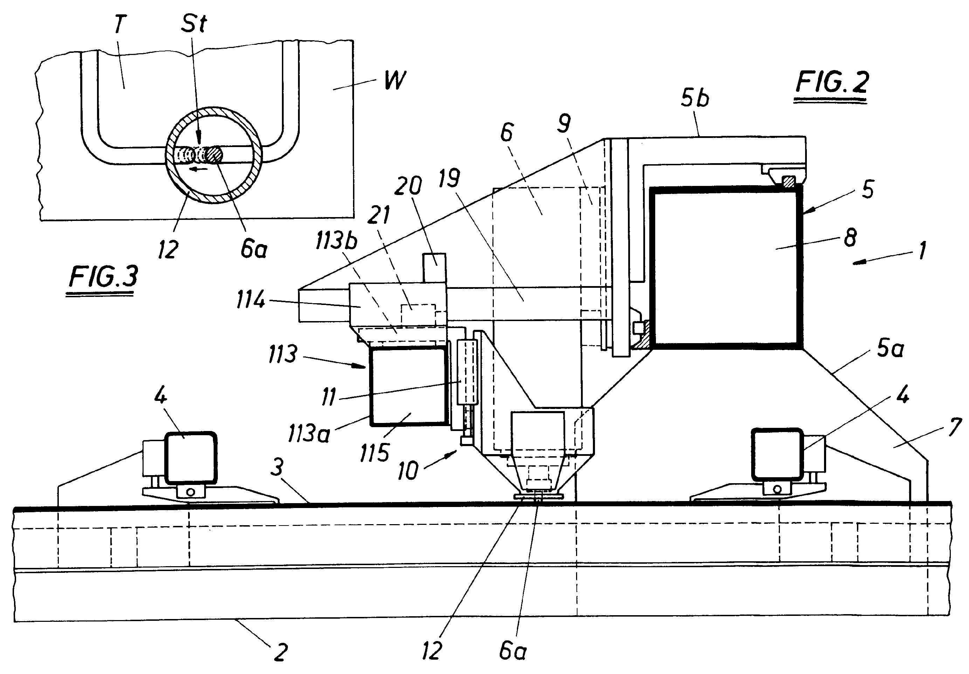

Gemäß dem Ausführungsbeispiel nach Fig. 2 ist für den Niederhalter 10 ein Niederhalterschlitten 113 vorgesehen, der zwar auch aus Längsschlitten 113a und Querschlitten 113b besteht, aber nicht am Aufspanntisch 2 sondern unmittelbar am Werkzeugschlitten 5 aufgebaut ist. Dazu sind am Querschlitten 5b des Werkzeugschlittens 5 Längsführungen 19 angesetzt, entlang denen der Längsschlitten 113a mit seinen Seitenwangen 114 verschiebbar geführt ist. Der Verstellweg in Längsrichtung ist entsprechend kurz und auch der Querträger 115 bietet dem Querschlitten 113b nur eine recht kurze Führungsbahn, welche Bewegungsmöglichkeiten aber durchaus ausreichen, um die gewünschte Relativverschiebung zwischen Fräßwerkzeug 6a und Niederhalterschuh 12 sicherzustellen. Für eine normale Synchronbewegung von Werkzeugaggregat 6 und Niederhalter 10 bleibt der Niederhalterschlitten 113 am Werkzeugschlitten 5 fixiert, so daß der Niederhalter 10 zwangsweise mit dem Werkzeugaggregat 6 mitfährt. Erst im Falle einer erforderlichen Relativverschiebung wird der Niederhalterschlitten 113 gegensinnig zum Werkzeugschlitten 5 angesteuert, wodurch der Niederhalter 10 relativ zur Auflagefläche 3 ortsfest bleibt und nur das Werkzeugaggregat 6 die durch den Werkzeugschlitten 5 aufgebrachte Vorschubbewegung mitmacht. Der Niederhalterschlitten 113 ist dazu mit nur angedeuteten Antrieben 20, 21 für den Längs- bzw. Querschlitten 113a, 113b ausgestattet, welche Antriebe den Niederhalterschlitten 113 einer im Vergleich zu den Werkzeugschlittenbewegungen gleich großen, aber entgegengerichteten Bewegung unterwerfen.

Wie in Fig. 3 angedeutet, ist mit der erfindungsgemäßen Werkzeugmaschine 1 ein einwandfreies Ausschneiden und Umrißbearbeiten von Werkstückteilen T aus einem Stapel von Werkstücken W möglich, da der Niederhalterschuh 12 während des umlaufenden Schnittvorganges mit dem Fräswerkzeug 6a synchron mitfährt und dabei den Wekstückstapel W im Bearbeitungsbereich festhält. Wegen der möglichen Relativbewegung zwischen Niederhalterschuh 12 und Umrißfräser 6a läßt sich aber auch der Reststeg am Ende des Schneidvorganges einwandfrei durchtrennen, weil in diesem Endbereich, wie in Fig. 3 angedeutet, der Niederhalterschuh 12 werkstückfest positioniert und nur der Umrißfräser 6a weiterbewegt wird, bis dieser Steg St durchtrennt ist.

Da der Niederhalterschuh 12 sowohl die Werkstücke W als auch die ausgeschnittenen Teile T fixiert, können die ausgeschnittenen Teile T beim Durchtrennen des Steges St den Schnittkräften nicht ausweichen und eine exakte Schnittführung ist gewährleistet.

## Patentansprüche

1. Werkzeugmaschine (1) zur Bearbeitung plattenförmiger Werkstücke (W), insbesondere zur Umrißbearbeitung übereinandergelegter Blechteile, mit einem eine Auflagefläche (3) und Aufspanneinrichtungen (4) aufweisenden Aufspanntisch (2) und einem auf einem Werkzeugschlitten (5) sitzenden, über die Auflagefläche (3) verfahrbaren Werkzeugaggregat (6), wobei ein parallel zum Werkzeugaggregat (6) über die Auflagefläche (3) bewegbarer Niederhalter (10) mit einem auf die Werkstückoberfläche aufdrückbaren Niederhalterschuh (12) zur Werkstückhalterung im Nahbereich der Bearbeitungsstelle vorgesehen ist, dadurch gekennzeichnet, daß der Niederhalter (10) auf einem eigenen, in seinen Vorschubbewegungen mit dem Werkzeugschlitten (5) synchronisierbaren Niederhalterschlitten (13, 113) sitzt, der während der Bearbeitung bedarfsweise im Sinne einer werkstückfesten Positionierung des Niederhalters (10) durch Unterbrechen der Synchronbewegung gegenüber dem Werkzeugschlitten (5) relativverschiebbar ist.

2. Werkzeugmaschine nach Anspruch 1, dadurch gekennzeichnet, daß der Niederhalterschlitten (13) gleichlaufend zum Werkzeugschlitten (5) am Aufspanntisch (2) geführt und über eine Kupplungseinrichtung (16) mit dem Werkzeugschlitten (5) kuppelbar ist.

3. Werkzeugmaschine nach Anspruch 2, dadurch gekennzeichnet, daß für den Niederhalterschlitten (13) Klemmeinrichtungen (17) od. dgl. vorgesehen sind.

4. Werkzeugmaschine nach Anspruch 2 oder 3, dadurch gekennzeichnet, daß am in Tischlängsrichtung verfahrbaren Teil (13a) des Niederhalterschlittens (13) vor und hinter dem Niederhalterschuh (12) sich über die Breite der Auflagefläche (3) erstreckende, auf die Werkstückoberfläche aufsetzbare Druckrollen (18) gelagert sind.

5. Werkzeugmaschine nach Anspruch 1, dadurch gekennzeichnet, daß der Niederhalterschlitten (113) am Werkzeugschlitten (5) abgestützt und vorzugsweise mit einem zur Werkzeugschlittenbewegung gegensinnig ansteuerbaren Antrieb (20, 21) ausgestattet ist.

## Claims

1. A machine tool (1) for machining workpieces (W) in sheet form, more particularly for machining the contour of superposed sheet-metal parts, comprising a work table (2) comprising a support surface (3) and fixing means (4), and a tool unit (6) which is mounted on a tool carrier (5) and which is adapted to traverse the support surface (3), a hold-down device (10) being provided which is movable over the support surface (3) parallel to the tool unit (6) and which has a shoe (12) adapted to be pressed onto the surface of the workpiece to hold the same in the vicinity of the machining point, characterised in that the hold-down device (10) is mounted on its own carrier (13, 113), the feed movements of which are synchronisable with the tool carrier (5), and which during machining is relatively displaceable to the tool carrier (5) for positioning of the hold-down device (10) in fixed relationship to the workpiece by interruption of the synchronous movement.

2. A machine tool according to claim 1,
characterised in that the hold-down device carrier (13) is guided on the work table (2) in synchronism with the tool carrier (5) and is adapted to be coupled to the tool carrier (5) via a coupling device (16).

3. A machine tool according to claim 2,
characterised in that clamping means (17) or the like are provided for the hold-down device carrier (13).

4. A machine tool according to claim 2 or 3,
characterised in that pressure rollers (18) extending over the width of the support surface (3) and adapted to be placed on the workpiece surface are mounted in front of and behind the hold-down shoe (12) on that part (13a) of the hold-down device carrier (13) which is adapted to traverse in the longitudinal direction of the table.

5. A machine tool according to claim 1,
characterised in that the hold-down device carrier (113) is supported on the tool carrier (5) and is preferably equipped with a drive (20, 21) adapted to be controlled in the opposite direction to the movement of the tool carrier.

## Revendications

1. Machine-outil (1), pour l'usinage de pièces façonnées (W) en forme de plaques, en particulier pour l'usinage de coutournage de pièces en tôles superposées, avec une table de fixation (2) présentant une face d'appui (3) et des dispositifs de bridage (4) et un groupe outil (6), monté sur un chariot porte-outil (5), déplaçable sur la face d'appui (3), un serre-flan (10) étant prévu, déplaçable sur la face d'appui (3), parallèlement au groupe outil (6), avec un patin de serre-flan (12) pouvant être pressé sur la surface de la pièce façonnée, en vue de fixer cette dernière dans la zone proche du point d'usinage,
caractérisée en ce que le serre-flan (10) est monté sur un chariot de serre-flan (13, 113) propre, dont les déplacements d'avance peuvent être synchronisés par rapport au chariot porte-outil (5), en pouvant en cas de besoin, pendant l'usinage, effectuer un déplacement relatif, en vue d'assurer un positionnement fixe du serre-flan (10) par rapport à la pièce façonnée, par interruption du mouvement synchronisé par rapport au chariot porte-outil (5).

2. Machine-outil selon la revendication 1,
caractérisée en ce que le chariot serre-flan (13 est guidé de façon synchrone sur la table de fixation (2) par rapport au chariot porte-outil (5) et peut être couplé au chariot porte-outil (5) par l'intermédiaire d'un dispositif de couplage (16).

3. Machine-outil selon la revendication 2,
caractérisée en ce que des dispositifs de serrage (17) ou analogues sont prévus pour le chariot serre-flan (13).

4. Machine-outil selon la revendication 2 ou 3,
caractérisée en ce que sont prévus des galets presseurs (18) montés à rotation, pouvant être appliqués sur la surface de la pièce façonnée, en s'étendant sur la largeur de la face d'appui (3), en étant placés sur la partie (13a), déplaçable dans la direction longitudinale de la table, du chariot de serre-flan (13), devant et derrière le patin de serre-flan (12).

5. Machine-outil selon la revendication 1,
caractérisée en ce que le chariot serre-flan (113) prend appui sur le chariot porte-outil (5) et est équipé, de préférence, d'un entraînement (20, 21), pouvant être commandé en sens inverse du sens de déplacement du chariot porte-outil.
